# FASCICULE DE BREVET EUROPEEN

(11) **EP 2 342 841 B1**
(45) Date de publication et mention de la délivrance du brevet: **01.08.2012**
(21) Numéro de dépôt: 09740481.8
(22) Date de dépôt: 20.08.2009
(51) Int. Cl.: H04B 7/185

(54) **PROCEDE ET SYSTEME D'ACQUISITION ET RAPATRIEMENT DE DONNEES SATELLITAIRES**
VERFAHREN UND SYSTEM ZUM BESCHAFFEN UND ZURÜCKHOLEN VON SATELLITENDATEN
METHOD AND SYSTEM FOR ACQUIRING AND BRINGING BACK DATA FROM A SATELLITE

(30) Priorité: 28.08.2008 FR 0804744
(43) Date de publication de la demande: 13.07.2011
(73) Titulaire: Centre National d'Etudes Spatiales (C.N.E.S.), 75039 Paris Cedex 01 (FR)
(72) Inventeur: ANTIKIDIS, Jean-Pierre, F-31320 Castanet (FR); FAVIER, Jean-Jacques, F-31380 Montastruc La Conseillère (FR)
(74) Mandataire: Cabinet BARRE LAFORGUE & associés
(86) Numéro de dépôt international: PCT/FR2009/051613
(87) Numéro de publication internationale: WO 2010/023396

(56) Documents cités:
- GB-A- 2 432 486
- US-A1- 2004 215 931

## Description

L'invention concerne un procédé d'acquisition et de rapatriement de données satellitaires représentatives d'une zone de l'espace. L'invention concerne également un instrument d'acquisition et de rapatriement de données satellitaires représentatives d'une zone de l'espace. L'invention concerne plus particulièrement un procédé de rapatriement d'images vers la Terre et un instrument d'observation terrestre.

Il est connu un instrument d'observation terrestre comprenant :
- une constellation de satellites, dite couche spatiale d'acquisition d'images, chaque satellite étant équipé d'au moins un dispositif optique d'acquisition d'images de portions du globe terrestre et comprenant au moins un module d'émission des images acquises vers ladite couche terrestre,
- une pluralité de stations de réception réparties sur la surface du globe, dite couche terrestre, chaque station de réception comprenant au moins un module de réception d'images issues de la couche spatiale.

La constellation de satellites SPOT constitue un tel instrument. Cette constellation comprend une pluralité de satellites, placés sur une orbite polaire, circulaire, héliosynchrone et en phase par rapport à la Terre. Chaque satellite présente un cycle de 26 jours. Chaque satellite comprend des instruments optiques, des enregistreurs de données et des systèmes de transmission des images vers des stations de réception au sol. Les instruments optiques sont adaptés pour assurer des visées obliques paramétrables, de telle sorte qu'une même région peut être observée plusieurs fois au cours du cycle de 26 jours. Les enregistreurs de données permettent de stocker les images à bord si le satellite n'est pas en visibilité d'une station sol. Lorsqu'un satellite est en visibilité d'une station sol, il transmet, par l'intermédiaire d'un module d'émission d'images, les images stockées dans les enregistreurs de bords vers la station sol. Chaque station sol transmet ensuite à son tour les images vers un serveur central de traitement et de stockage des images. Il en va de même dans de nombreux autres instruments connus, par exemple la constellation Landsat.

Un inconvénient d'un tel instrument réside dans le coût de la fabrication, de l'installation, de la gestion et de la maintenance de la constellation de satellites, des stations sol et du serveur central. En particulier, un tel instrument nécessite l'installation et la gestion au sol d'une pluralité de stations sol opérées de façon autonome les unes par rapport aux autres et adaptées pour envoyer les images reçues vers un serveur central de sauvegarde des images en vue de leur distribution à des utilisateurs.

Par ailleurs, un tel instrument se heurte à une difficulté pratique majeure dans le cas où l'on cherche à obtenir une couverture de l'ensemble du globe terrestre par des images qui présentent une résolution spatiale de l'ordre du mètre et une fréquence de couverture globale de l'ordre de la journée. Une telle couverture impose la gestion par le serveur central de l'ordre de 1 500 Téraoctets de données par jour, soit 170 Giga-octets par seconde, dépassant largement les capacités de transmission satellitaire et de traitement sol accessibles avec les technologies et les architectures des serveurs actuellement disponibles.

Le document GB 2 432 486 A divulgue un procédé d'acquisition et de rapatriement de données satellitaires d'une zone de l'espace, et le document US 2004/215931 A1 divulgue une inter-connexion des stations avec Internet.

L'invention vise à pallier ces inconvénients et à fournir un instrument d'acquisition et de rapatriement de données satellitaires qui permet l'acquisition et le rapatriement d'une grande quantité de données.

L'invention vise également à fournir un tel instrument qui ne nécessite pas un serveur central de traitement et de sauvegarde des données.

Pour ce faire, l'invention concerne un instrument d'acquisition et de rapatriement de données satellitaires représentatives d'une zone de l'espace, dite zone cible, comprenant :
- une pluralité de satellites, dite couche spatiale d'acquisition de données, chaque satellite étant équipé d'au moins un dispositif d'acquisition de données d'au moins une portion de ladite zone cible, et de moyens de transmission vers le sol des données acquises,
- une pluralité de stations de réception terrestres, dite couche terrestre, chaque station de réception comprenant un module de réception de données et des moyens de mémorisation de données,
   caractérisé en ce qu'il comprend :
- pour chaque donnée reçue par une station de réception, dite station réceptrice, en provenance de ladite couche spatiale, des moyens de détermination d'une station de réception destinée à mémoriser et à conserver cette donnée, dite station de réception compétente pour cette donnée,
- un réseau numérique terrestre reliant les stations de réception entre elles de sorte qu'une donnée reçue par une station réceptrice non compétente pour cette donnée puisse être acheminée par le biais de ce réseau numérique terrestre vers la station de réception compétente pour cette donnée si ladite station réceptrice pour cette donnée n'est pas ladite station de réception compétente pour cette donnée.

Dans tout le texte et pour chaque donnée issue de la couche spatiale, une station de réception est dite réceptrice pour cette donnée si elle reçoit cette donnée directement par l'un des satellites de la couche spatiale et une station de réception est dite compétente pour cette donnée si cette donnée est destinée à être mémorisée par cette station de réception, et à être conservée mémorisée par cette station de réception compétente. Les données satellitaires issues de la couche spatiale se trouvent donc mémorisées sous forme distribuée au sein des différentes stations de réception compétentes, et ne sont donc pas en particulier centralisées sur un site central comme dans les instruments antérieurs tels que Spot ou Landsat. Une station de réception peut être réceptrice et compétente pour une donnée dans l'éventualité où la station de réception qui reçoit directement la donnée depuis la couche spatiale est également destinée à mémoriser cette donnée.

Le réseau numérique terrestre forme des moyens d'acheminement de chaque donnée d'une station réceptrice à la station de réception compétente pour cette donnée.

Un instrument selon l'invention permet un rapatriement des données depuis la couche spatiale jusqu'à la couche terrestre qui peut non seulement être direct -un satellite envoie la donnée acquise directement à la station de réception compétente pour mémoriser cette image- mais également indirect -un satellite envoie une donnée acquise à une station de réception non compétente pour cette donnée, et le réseau numérique terrestre permet alors d'acheminer cette donnée de cette station réceptrice non compétente à la station compétente pour cette donnée-.

Un tel rapatriement mixte de données -direct et indirect- permet que chaque donnée acquise par la couche spatiale suive un chemin opportuniste non systématique. En d'autres termes, si la donnée peut être rapatriée selon un chemin direct vers sa station de réception compétente pour cette donnée, compte tenu notamment de la charge de cette station de réception, de son état (en état de marche ou non), des conditions atmosphériques, etc., la donnée emprunte ce chemin direct entre le satellite et cette station de réception compétente. En revanche, si le rapatriement direct n'est pas possible, la donnée emprunte alors un chemin indirect constitué d'un transfert entre le satellite et une station réceptrice et un transfert subséquent entre la station réceptrice et la station de réception compétente pour cette donnée par le réseau numérique terrestre.

Avantageusement et selon l'invention, le réseau numérique terrestre est un réseau numérique public. Un tel réseau est avantageusement compatible IP, et est par exemple le réseau Internet. La liaison sol entre la station réceptrice d'une donnée pour laquelle elle n'est pas compétente et la station de réception compétente utilise donc avantageusement le principe du protocole IP. La donnée est diffusée sur le réseau et est propagée de station en station jusqu'à ce qu'une station de réception reconnaisse cette donnée comme une donnée pour laquelle elle est compétente et qui lui est donc destinée.

Pour chaque donnée reçue par la couche terrestre, des moyens de détermination d'une station de réception compétente pour cette donnée désignent une telle station de réception compétente. Ces moyens de détermination peuvent être de tous types. Ils peuvent par exemple déterminer la compétence d'une station en fonction d'une caractéristique propre à la donnée, chaque station étant compétente pour des données présentant certaines caractéristiques propres communes. Par exemple, la caractéristique de la donnée déterminant la compétence peut être une caractéristique liée à la zone géographique couverte par cette donnée de sorte qu'une station de réception compétente pour cette caractéristique recevra directement ou indirectement toutes les données correspondant à cette zone. La caractéristique de la donnée déterminant la compétence peut également être une caractéristique liée au type d'instrument ayant acquis cette donnée de sorte qu'une station de réception compétente pour ces données recevra directement ou indirectement toutes les données acquises par des instruments de ce type. La caractéristique de la donnée déterminant la compétence peut être liée, dans le cas de données images, à un niveau de gris moyen de l'image, à une plage de fréquences spatiales prédéterminée, à une texture prédéterminée, et de manière générale à tous types de caractéristiques susceptibles d'être extraites d'une image par des moyens de traitement d'images. Dans ce cas, toutes les images présentant des niveaux de gris moyens similaires, des fréquences spatiales similaires, des textures similaires, etc. sont acheminées directement ou indirectement vers une même station de réception compétente. La caractéristique déterminant la compétence peut également correspondre à une date et/ou à une heure de l'acquisition de la donnée de sorte que, par exemple, toutes les données acquises dans un même créneau horaire chaque jour soient acheminées vers la même station de réception pour être mémorisées par cette station de réception compétente. De manière générale, les moyens de détermination permettent de discriminer les données reçues par la couche terrestre de manière à ce que les données présentant des caractéristiques propres similaires soient mémorisées par la même station de réception. Avantageusement et selon l'invention, la compétence d'une station de réception est fonction d'une zone géographique couverte par les données. Cette zone est une portion de la zone cible dont l'instrument selon l'invention acquiert et rapatrie des données. Cette zone géographique qui détermine la compétence d'une station de réception est dite cercle de visibilité de cette station de réception. Cette zone n'est pas nécessairement continue de sorte qu'une station de réception peut être compétente pour un ensemble de zones géographiques disjointes les unes des autres.

Ces moyens de détermination peuvent être physiquement distincts des stations de réception. Ainsi, ils peuvent par exemple comprendre un serveur central relié à l'ensemble des stations de réception de la couche terrestre et adapté pour établir, par exemple à partir d'une table de correspondance, la station de réception compétente pour chaque donnée compte tenu d'une caractéristique liée à cette donnée.

Néanmoins, avantageusement et selon l'invention, ces moyens de détermination comprennent, pour chaque station de réception :
- des données caractéristiques définissant une portion de ladite zone cible non nécessairement continue, dite cercle de visibilité de cette station de réception, pour laquelle cette station de réception est compétente,
- un module de sélection de données reçues par ledit module de réception de cette station adapté pour sélectionner les données qui appartiennent audit cercle de visibilité de cette station et diffuser sur ledit réseau numérique terrestre toutes les données reçues par son module de réception non sélectionnées par ledit module de sélection.

Selon cette variante de réalisation, les moyens de détermination sont au moins en partie localisés dans chaque station de réception. En particulier, chaque station de réception comprend un module de sélection de données reçues par le module de réception de cette station de réception adapté pour sélectionner les données qui correspondent au cercle de visibilité de cette station. Si la donnée reçue par cette station n'est pas de sa compétence, alors cette donnée est mise sur le réseau numérique terrestre reliant les stations de réception entre elles de sorte qu'elle puisse être acheminée vers la station de réception compétente pour cette donnée. Selon cette variante, le module de réception de chaque station de réception est adapté non seulement pour recevoir les données directement depuis la couche spatiale mais également pour recevoir les données depuis le réseau numérique terrestre de sorte que le module de sélection puisse également analyser les données issues du réseau numérique pour définir si cette donnée est de la compétence de cette station de réception ou doit être remise sur le réseau. Ainsi, de proche en proche, cette donnée véhicule sur le réseau numérique terrestre jusqu'à atteindre sa station de réception compétente.

Selon une autre variante et comme indiqué précédemment, un module de sélection peut sélectionner les données en fonction d'autres caractéristiques que leur appartenance au cercle de visibilité de la station, tel que par exemple, l'origine instrumental de cette donnée, l'heure d'acquisition, etc.

Dans le cas où la compétence est fonction de la zone géographique couverte par la donnée, avantageusement et selon l'invention, chaque station de réception comprend dans une mémoire accessible par ledit module de sélection, les données caractéristiques qui définissent ledit cercle de visibilité de cette station de réception. Le cercle de visibilité est défini localement dans chaque station de réception.

En outre, avantageusement, un instrument selon l'invention comprend, pour chaque station de réception, des moyens d'accès à distance à ladite mémoire de cette station de réception qui comprend lesdites données caractéristiques qui définissent ledit cercle de visibilité de cette station de réception. Selon cette variante, un opérateur peut, si nécessaire, aisément redéfinir à distance la compétence de chaque station de réception en modifiant les données caractéristiques qui définissent le cercle de visibilité de cette station de réception et donc sa compétence. Cela peut par exemple être utile en cas d'ajout à l'instrument d'une ou plusieurs stations de réception en vue notamment de mieux répartir les données acquises entre toutes les stations de réception de la couche terrestre. Cela peut également être utile en cas d'une redéfinition de la zone cible observée par l'instrument qui aurait pour conséquence d'élargir la zone observée par l'instrument et donc d'augmenter la quantité de données transmises vers la couche terrestre.

Cette zone cible peut être de tous types. En particulier, un instrument selon l'invention peut être utilisé pour l'acquisition et le rapatriement d'images de la voûte céleste. Selon ce mode de réalisation, les satellites portent des instruments d'acquisition d'images et chaque instrument est orienté vers les étoiles de manière à acquérir une zone du ciel. Les images peuvent ensuite être rapatriées vers la couche terrestre et être réparties en fonction de la zone de l'univers couverte par chaque image. Selon ce mode de réalisation, une station de réception peut être compétente pour toutes les images qui correspondent à une galaxie donnée, ou à un type d'objets célestes particuliers observés, etc.

Avantageusement et selon l'invention, la zone cible est le globe terrestre. Selon ce mode de réalisation, l'instrument est un instrument d'acquisition et de rapatriement de données d'observation de la terre.

De préférence, les données issues de ladite couche spatiale sont des images numériques. Un tel instrument permet l'acquisition et le rapatriement d'images du globe terrestre. Selon ce mode de réalisation, de préférence, la compétence d'une station de réception est associée à une zone du globe.

Selon ce mode de réalisation, un rapatriement mixte des images permet à l'instrument d'acquérir des images de zones qui ne comportent pas de station de réception, telles que les zones de mer, tout en permettant leur rapatriement vers une station de réception compétente pour ces zones. Une telle station de réception compétente présente un cercle de visibilité qui englobe tout ou partie des images de la mer. Cela permet également d'attribuer à une station de réception donnée, par exemple la station compétente pour les images de Paris, le traitement et l'hébergement des images de la Corse. En d'autres termes, on attribue à la station de réception compétente pour Paris, la compétence pour la Corse. Dès lors, toutes les images de la Corse sont acheminées vers la station compétente pour Paris par un rapatriement indirect.

Selon cette variante, chaque image reçue est transmise à un module de sélection adapté pour déterminer si cette image est une image qui appartient ou non au cercle de visibilité de cette station de réception. La détermination de cette appartenance peut être effectuée de différentes façons. Néanmoins, avantageusement et selon l'invention, le module de sélection d'images de chaque station de réception comprend des moyens de lecture de l'en-tête de chaque image adaptés pour lire des données représentatives des coordonnées spatiales et temporelles de cette image. Ces coordonnées spatiales et temporelles de l'image sont insérées dans l'en-tête de l'image par le satellite qui prend l'image. En effet, chaque satellite de la couche spatiale connaît l'heure à laquelle l'image est acquise par son dispositif d'acquisition d'images ainsi que les coordonnées de l'image qu'il acquiert.

Selon ce mode de réalisation, chaque station de réception mémorise localement les images pour lesquelles elle est compétente.

Une station de réception d'un instrument selon l'invention peut ainsi se voir attribuer le traitement et la sauvegarde de zones du globe qui sont géographiquement éloignées de l'emplacement physique de la station de réception. Les images correspondantes sont acheminées vers la station compétente par un rapatriement indirect tel que décrit ci-dessus. Le paramétrage du cercle de visibilité d'une station de réception permet ainsi de rendre cette station compétente pour n'importe quelle zone du globe. En outre, il est aisé avec un instrument selon l'invention de changer la compétence d'une station de réception. Ce changement de compétence consiste à changer la définition de son cercle de visibilité, c'est à dire à modifier les données mémorisées dans ladite mémoire accessible par le module de sélection, représentatives du cercle de visibilité.

L'invention concerne également un procédé d'acquisition et de rapatriement de données satellitaires d'un zone de l'espace, dite zone cible, dans lequel :
- des données sont acquises par une constellation de satellites, dite couche spatiale, chaque satellite étant équipé d'au moins un dispositif d'acquisition de données,
- les données sont transmises vers une pluralité de stations de réception réparties sur la surface du globe, dite couche terrestre, chaque station de réception comprenant au moins un module de réception de données et des moyens de mémorisation de données reçues,
   caractérisé en ce que, pour chaque donnée reçue par une station de réception, dite station réceptrice, en provenance de ladite couche spatiale :
- une station de réception destinée à mémoriser et à conserver cette donnée, dite station de réception compétente, est déterminée par des moyens de détermination,
- cette donnée est mémorisée par lesdits moyens de mémorisation de ladite station réceptrice de cette donnée si cette station réceptrice est la station de réception compétente pour cette donnée,
- cette donnée est acheminée par le biais d'un réseau numérique terrestre reliant les stations de réception entre elles, de ladite station réceptrice à ladite station de réception compétente pour cette donnée si ladite station réceptrice de cette donnée n'est pas ladite station de réception compétente pour cette donnée.

Un procédé d'acquisition et de rapatriement de données selon l'invention permet un rapatriement des données depuis la couche spatiale jusqu'à une station de réception de la couche terrestre qui peut être direct ou indirect.

Selon une variante de l'invention, le procédé selon l'invention concerne l'acquisition et le rapatriement d'images d'observation terrestre. Selon un tel procédé d'acquisition et de rapatriement d'images du globe terrestre :
- des images du globe sont prises par une constellation de satellites, chaque satellite étant équipé d'au moins un dispositif optique d'acquisition d'images et comprenant au moins un module d'émission d'images,
- les images sont transmises vers une pluralité de stations de réception réparties sur la surface du globe, chaque station de réception comprenant au moins un module de réception d'images,
   caractérisé en ce que :
- chaque image reçue par un module de réception d'une station de réception est analysée par un module de sélection adapté pour sélectionner une image d'une zone géographique prédéterminée, dite cercle de visibilité de la station de réception,
- chaque image non sélectionnée par ledit module de sélection est transmise vers un réseau numérique terrestre qui relie les stations de réception, de telle sorte qu'elle puisse atteindre par une liaison sol la station de réception compétente pour cette image.

Avantageusement et selon l'invention, pour chaque station de réception,
- des données caractéristiques définissent une portion de ladite zone cible non nécessairement continue, dite cercle de visibilité de cette station de réception, pour laquelle cette station de réception est compétente,
- des données reçues par ledit module de réception de cette station de réception sont sélectionnées par un module de sélection si ces données appartiennent audit cercle de visibilité de cette station, et diffusées sur ledit réseau numérique terrestre si elles sont non sélectionnées par ledit module de sélection.

Avantageusement et selon l'invention, lesdites données caractéristiques définissant ledit cercle de visibilité de chaque station de réception sont mémorisées dans une mémoire accessible par ledit module de sélection de cette station de réception.

Avantageusement et selon l'invention, pour chaque station de réception, ladite mémoire de cette station de réception qui comprend lesdites données caractéristiques qui définissent ledit cercle de visibilité de cette station de réception, est accessible à distance par des moyens d'accès à distance.

Avantageusement et selon l'invention, ledit réseau numérique terrestre est un réseau numérique public.

Avantageusement et selon l'invention, ladite zone cible est le globe terrestre.

Avantageusement et selon l'invention, lesdites données issues de ladite couche spatiale sont des images numériques.

Avantageusement et selon l'invention, pour chaque image reçue par chaque station de réception, des données représentatives des coordonnées spatiales et temporelles de cette image mémorisées dans l'en-tête de l'image reçue par ledit module de sélection de cette station de réception sont lues par des moyens de lecture.

L'invention concerne également un instrument d'acquisition et de rapatriement de données satellitaires et un procédé d'acquisition et de rapatriement de données satellitaires caractérisés en combinaison par tout ou partie des caractéristiques mentionnées ci-dessus ou ci-après.

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue schématique d'une portion d'un instrument d'acquisition et de rapatriement de données satellitaires selon un mode de réalisation de l'invention,
- la figure 2 est une vue schématique selon une autre représentation d'un instrument d'observation du globe terrestre selon un mode de réalisation de l'invention,
- la figure 3 est une vue schématique d'un instrument selon un mode de réalisation de l'invention qui représente un rapatriement direct d'une image depuis un satellite jusqu'à une station de réception compétente pour cette image,
- la figure 4 est une vue schématique d'un instrument selon un mode de réalisation de l'invention qui représente un rapatriement indirect d'une image depuis un satellite jusqu'à une station de réception compétente pour cette image par l'intermédiaire de stations de réception non compétentes pour cette image,
- la figure 5 est une vue schématique d'un satellite et d'une station de réception d'un instrument selon un mode de réalisation de l'invention.

Sur les figures, les échelles et les proportions ne sont pas strictement respectées et ce, à des fins d'illustration et de clarté.

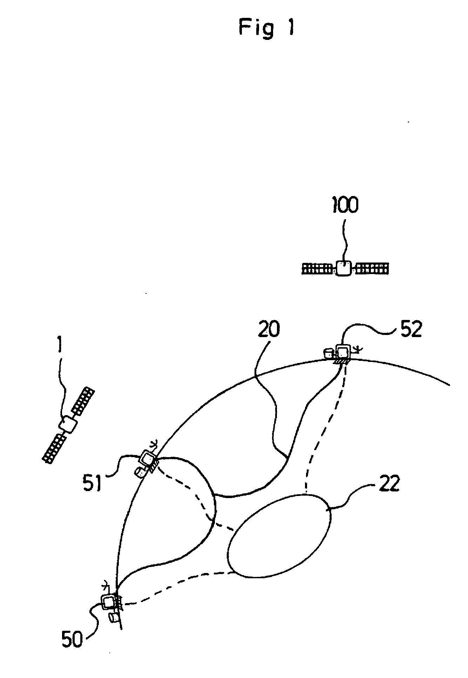

La figure 1 est une vue très schématique d'une portion d'un instrument selon l'invention. Sur cette figure, un instrument d'acquisition et de rapatriement des données satellitaires représentatives d'une zone de l'espace, dite zone cible, comprend une pluralité de satellites 1, 100 et une pluralité de stations 50, 51, 52 de réception terrestres. En outre, un tel instrument comprend, pour chaque donnée reçue par une station de réception 50, 51, 52, des moyens 22 de détermination d'une station 50, 51, 52 de réception destinée à mémoriser cette donnée, dite station de réception compétente pour cette donnée, et des moyens d'acheminement de cette donnée de ladite station réceptrice de cette donnée à ladite station de réception compétente pour cette donnée. Ces moyens d'acheminement sont formés d'un réseau 20 numérique terrestre. Un tel réseau 20 numérique terrestre assure la circulation de données entre les différentes stations par des moyens essentiellement terrestres. Selon un mode préférentiel de réalisation, ce réseau 20 numérique terrestre est un réseau numérique public tel que le réseau Internet.

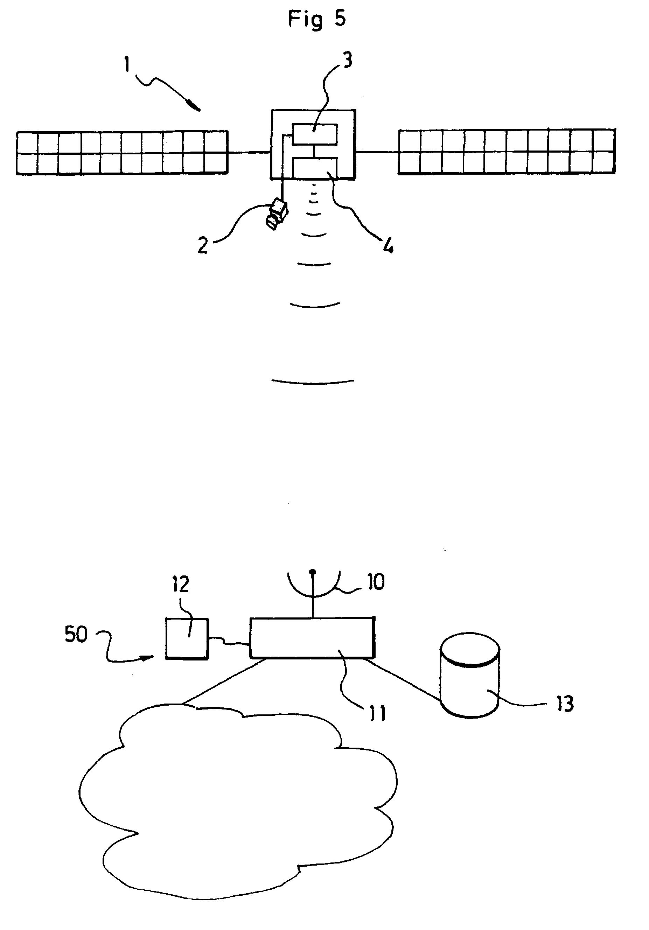

Les moyens 22 de détermination peuvent être de tous types. Ils peuvent par exemple déterminer la compétence d'une station en fonction d'une caractéristique propre à la donnée, chaque station étant compétente pour des données présentant certaines caractéristiques propres communes. En outre, ces moyens 22 de détermination peuvent être physiquement distincts des stations de réception. Ainsi, ils peuvent par exemple comprendre un serveur central relié à l'ensemble des stations de réception et adapté pour établir, par exemple à partir d'une table de correspondance, la station de réception compétente pour chaque donnée compte tenu d'une caractéristique liée à cette donnée. Selon un mode préférentiel de réalisation représenté notamment sur la figure 5, ces moyens 22 de détermination sont incorporés dans chaque station de réception et comprennent, pour chaque station 50, 51, 52, 53, 54 de réception, des données caractéristiques définissant une portion de ladite zone cible, dite cercle de visibilité de cette station de réception, pour laquelle cette station de réception est compétente et un module 11 de sélection de données reçues par un module 12 de réception de cette station adapté pour sélectionner les données qui appartiennent audit cercle de visibilité de cette station et fournir au réseau 20 numérique toutes les données reçues par son module de réception non sélectionnées par ledit module de sélection de sorte qu'elles puissent être acheminées vers leur station de réception compétente correspondante.

Le mode de réalisation des figures concerne un instrument d'acquisition et de rapatriement d'images d'observation du globe terrestre. L'homme du métier pourra sans difficulté, à partir de ce mode de réalisation décrit, réaliser un instrument d'acquisition et de rapatriement d'autres types de données, tel que par exemple des données radars d'objets célestes.

Selon ce mode de réalisation, chaque satellite comprend au moins un dispositif 2 optique d'acquisition d'images et un module 4 d'émission d'images vers le sol.

Le dispositif 2 optique d'acquisition d'images peut être de tous types connus. Néanmoins, selon un mode préférentiel de réalisation, un tel dispositif 2 optique est une caméra à visée fixe orientée vers la Terre et adaptée pour acquérir des images multispectrales des régions terrestres que ce satellite 1 survole. Un tel dispositif 2 optique à visée fixe ne permet donc pas par définition des dépointages. Un satellite 1 d'un instrument selon l'invention ne nécessite donc pas de programme de pointage particulier, ce qui réduit sensiblement les coûts de fabrication et de maintenance.

Les satellites 1 peuvent par exemple être des parachutes optiques. Ces satellites 1 présentent de préférence une orbite basse de telle sorte qu'ils puissent décrire un grand nombre d'orbites en une journée. De préférence, chaque satellite 4 d'un instrument selon l'invention effectue plus d'une orbite en une journée. Selon un mode de réalisation de l'invention, chaque satellite 1 effectue seize orbites en une journée.

Le module 4 d'émission d'images d'un satellite 1 d'un instrument selon l'invention est adapté pour émettre les images vers le sol.

Un tel module 4 d'émission peut être de tous types connus et n'est pas décrit ici en détail. Selon un mode particulièrement avantageux de l'invention, chaque satellite 1 comprend, tel que représenté sur la figure 5, un module 3 de compression d'images agencé entre le dispositif 2 d'acquisition d'images et le module 4 d'émission d'images vers une station 50 de réception, de telle sorte que chaque image acquise par le dispositif 2 d'acquisition d'images puisse être comprimée par ce module 3 de compression avant d'être émise vers la Terre par le module 4 d'émission d'images.

Chaque station 50, 51, 52, 53, 54, 55, 56 de réception comprend, selon un mode préférentiel de réalisation de l'invention, un module 10 de réception des images, un module 11 de sélection d'images et une mémoire 12 accessible par le module 11 de sélection. Cette mémoire 12 comprend des données représentatives des zones géographiques qui constituent le cercle de visibilité de cette station de réception et permettent donc de paramétrer ce cercle de visibilité. Une station de réception est dite compétente pour une image reçue si elle correspond à une zone géographique définie par les données de la mémoire 12. De plus, chaque station 50, 51, 52, 53, 54, 55, 56 de réception comprend des moyens 13 de mémorisation des images reçues qui font partie du cercle de visibilité de cette station de réception. Ces moyens 13 de mémorisation peuvent être de tous types, par exemple une mémoire de masse telle qu'une mémoire à disques.

Selon l'invention, les stations 50, 51, 52, 53, 54, 55, 56 de réception sont reliées entre elles par un réseau 20 numérique de telle sorte que chaque station 50, 51, 52, 53, 54, 55, 56 de réception puisse diffuser sur ce réseau 20 numérique toutes les images reçues par son module 10 de réception qui ne correspondent pas à son cercle de visibilité. Les images transmises sur le réseau 20 numérique terrestre sont les images qui ne sont pas sélectionnées par le module 11 de sélection. En outre, ces images non sélectionnées ne sont pas mémorisées par les moyens 13 de mémorisation de cette station 50, 51, 52, 53, 54, 55, 56 de réception.

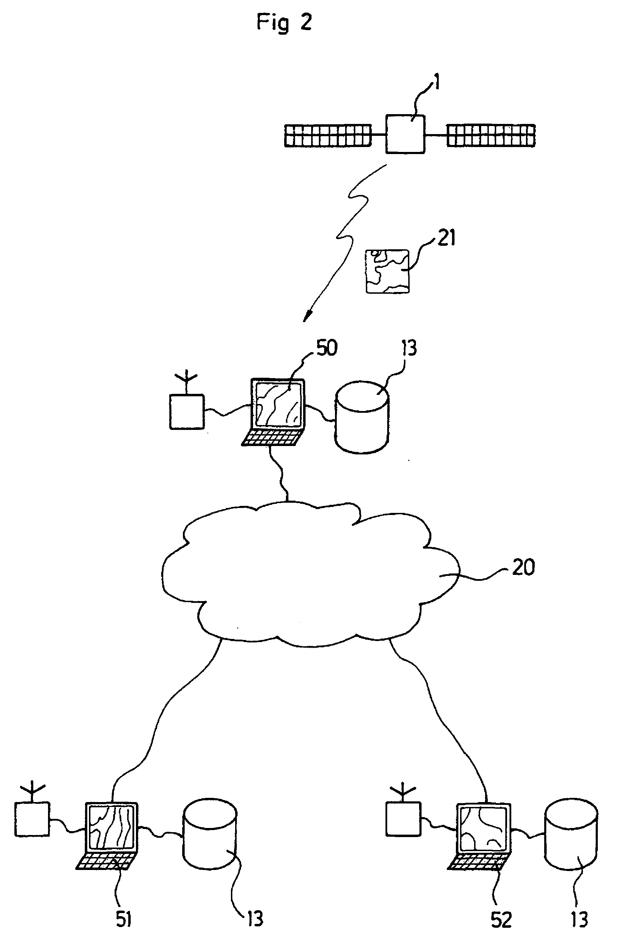

Sur la figure 2, un satellite 1 qui a fait l'acquisition d'une image 21 d'une portion du globe terrestre transmet l'image 21 acquise vers une station 50 de réception représentée schématiquement sur la figure 5. Lorsque cette image 21 est reçue par le module de réception de cette station 50 de réception, elle est transmise au module 11 de sélection. Ce module 11 de sélection détermine, par exemple, par la lecture de l'en-tête de l'image 21, la zone géographique qui correspond à cette image 21 ainsi que la période à laquelle cette image a été prise par un satellite 1. Pour ce faire, le module 11 de sélection comprend des moyens de lecture de l'en-tête de chaque image reçue par le module 10 de réception. Le module 11 de sélection détermine ensuite si cette image appartient au cercle de visibilité de cette station 50 de réception. Cette détermination est faite, selon ce mode de réalisation, en accédant à la mémoire 12 de cette station de réception qui contient la liste de toutes les régions du monde pour lesquelles cette station est compétente. Si la station 50 de réception est compétente pour cette image 21, le module 11 de sélection ordonne la mémorisation de l'image 21 par les moyens 13 de mémorisation de cette station 50. En revanche, si le module 11 de sélection détermine que la station 50 de réception n'est pas compétente pour cette image 21, elle ordonne la mise de cette image sur le réseau 20 numérique public. Chaque station 51, 52 reliée à ce réseau 20 numérique détermine alors, lorsque l'image 21 lui parvient, si elle appartient à son cercle de visibilité ou non. Dès qu'une station de réception détermine que l'image 21 lui revient, elle la mémorise par ses moyens 13 de mémorisation, sinon elle la laisse circuler sur le réseau 20 numérique terrestre.

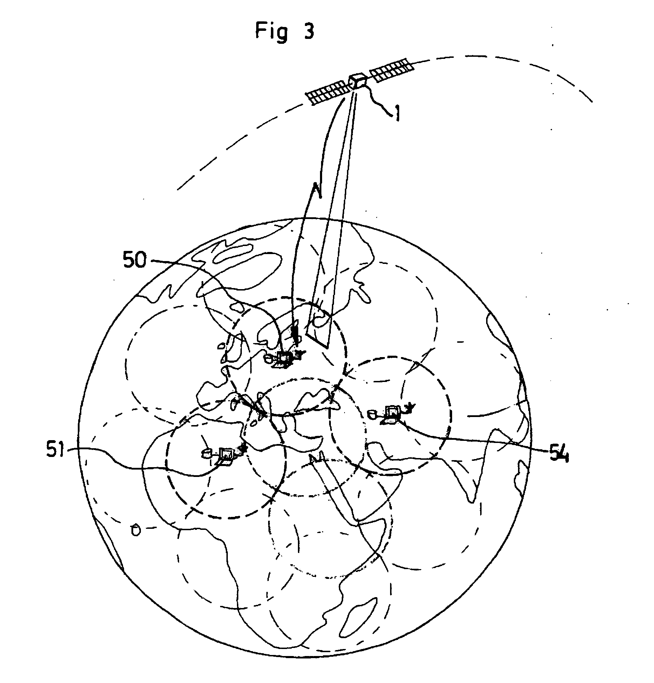

Sur la figure 3, un satellite 1 a fait l'acquisition d'une image d'une zone du cercle de visibilité (représenté par des pointillés) de la station 50 de réception. Dans cet exemple, le cercle de visibilité de la station 50 de réception définit une région continue autour de la station 50 de réception. Cette image est transmise directement à la station 50 de réception qui est donc compétente pour cette image. La station 50 de réception va donc mémoriser cette image par ses moyens 13 de mémorisation.

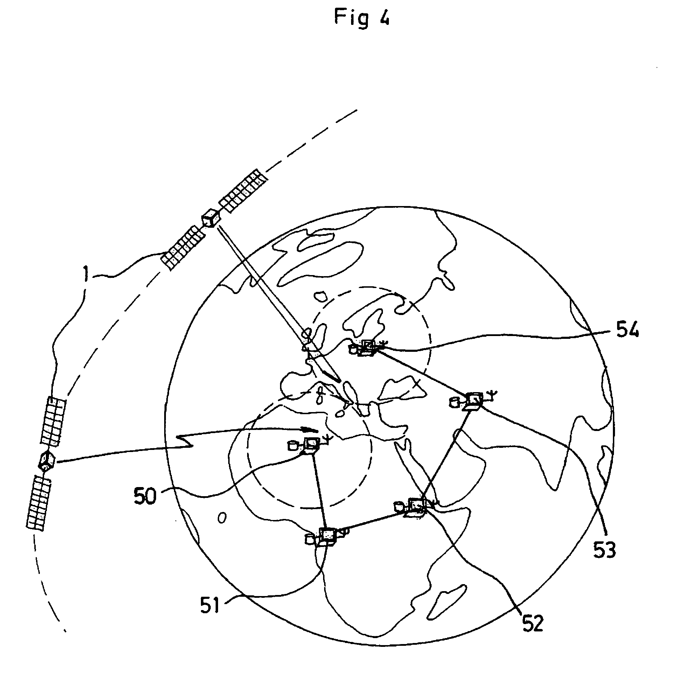

Sur la figure 4, un satellite 1 a fait l'acquisition d'une image d'une zone du cercle de visibilité de la station 54 de réception. La figure 4 illustre le cas où le satellite 1 n'a pas pu transmettre directement l'image acquise à la station 54 de réception compétente pour cette image. Un tel cas peut se produire par exemple lorsque la station 54 de réception est en panne ou en cours de maintenance, ou lorsque la station 54 de réception est déjà en train de recevoir une image en provenance d'un autre satellite, ou lorsque la station 54 de réception n'est plus en visibilité du satellite, etc. Dans un tel cas, le satellite 1 transmet l'image à une autre station 50 de réception, qui n'est pas compétente pour cette image. Le module de sélection de cette station 50 de réception n'ayant pas sélectionné l'image reçue, la station 50 de réception transmet l'image sur le réseau numérique terrestre. Sur la figure 3, l'image transite successivement par la station 51 de réception, la station 52 de réception, la station 53 de réception pour être reconnue par la station 54 de réception et être ainsi sauvegardée par les moyens 13 de mémorisation de la station 54 de réception.

Chaque station de réception constitue, au fur et à mesure des acquisitions d'images réalisées par les satellites, une base d'images représentatives de son cercle de visibilité tel que défini par les données figurant dans sa mémoire 12. Chaque image de cette base d'images est définie, par exemple, par des coordonnées spatiales et par une coordonnée temporelle. Ces coordonnées spatiales et temporelles sont, selon un mode de réalisation avantageux, les données qui figurent dans l'en-tête de l'image et qui permettent à chaque module de sélection de déterminer si l'image est de sa compétence ou non. Selon un mode de réalisation avantageux de l'invention, à un triplet de coordonnées spatiales et temporelles peut correspondre une ou plusieurs images issues d'une ou plusieurs sources. En particulier, un instrument selon ce mode de réalisation de l'invention peut comprendre, en plus des satellites de la couche spatiale, des caméras terrestres, telles que des webcams adaptées pour acquérir une image et la transmettre par l'intermédiaire du réseau 20 numérique à une station de réception compétente compte tenu des coordonnées spatiales et temporelles de l'image en question. Un instrument selon l'invention peut également comprendre d'autres dispositifs d'acquisition d'images agencés à bord d'autres engins volants, voire même agencés en haut d'édifices terrestres, tels que des immeubles, et transmettre les images acquises vers les stations de réception.

Un instrument selon l'invention permet à tout dispositif connecté au réseau 20 numérique d'accéder aux stations de réception et donc aux images mémorisées dans les moyens de mémorisation de ces stations de réception. Selon un mode de réalisation avantageux, les images sont directement accessibles par le réseau Internet de telle sorte que n'importe quel moteur de recherche puisse accéder à une image d'une région donnée. Pour ce faire, les images peuvent être archivées avec un nom selon un format prédéterminé qui représente les coordonnées spatiales et temporelles de l'image. De plus, un utilisateur qui cherche une image d'une région donnée prise par un instrument selon l'invention n'a pas besoin de savoir quelle station de réception héberge l'image qu'il recherche. La répartition des images du globe prises par un instrument selon l'invention entre les différentes stations de réception est transparente du point de vue de celui qui recherche une image.

Avantageusement, un instrument selon l'invention met en oeuvre un procédé selon l'invention. Un procédé selon l'invention est avantageusement mis en oeuvre par un instrument selon l'invention.

Selon d'autres modes de réalisation, un instrument selon l'invention acquiert et rapatrie des données autres que des images. En outre, la zone cible de l'instrument peut être une partie de l'espace, une partie du globe terrestre, etc. Les données caractéristiques permettant de répartir les données acquises entre les différentes stations de réception peuvent être de tous types et reposer sur une caractérisation intrinsèque à la donnée, ou intrinsèque à l'instrument d'acquisition, etc.

## Revendications

1. Procédé d'acquisition et de rapatriement de données satellitaires d'une zone de l'espace, dite zone cible, dans lequel :
- des données (21) sont acquises par une constellation de satellites (1), dite couche spatiale, chaque satellite (1) étant équipé d'au moins un dispositif (2) d'acquisition de données,
- les données (21) sont transmises vers une pluralité de stations (50, 51, 52, 53, 54, 55, 56) de réception réparties sur la surface du globe, dite couche terrestre, chaque station (50, 51, 52, 53, 54, 55, 56) de réception comprenant au moins un module (10) de réception de données et des moyens de mémorisation de données reçues,
**caractérisé en ce que**, pour chaque donnée reçue par une station de réception, dite station réceptrice, en provenance de ladite couche spatiale :
- une station de réception destinée à mémoriser et à conserver cette donnée, dite station de réception compétente, est déterminée par des moyens de détermination,
- cette donnée est mémorisée par lesdits moyens de mémorisation de ladite station réceptrice de cette donnée si cette station réceptrice est la station de réception compétente pour cette donnée,
- cette donnée est acheminée par le biais d'un réseau numérique terrestre reliant les stations de réception entre elles, de ladite station réceptrice à ladite station de réception compétente pour cette donnée si ladite station réceptrice de cette donnée n'est pas ladite station de réception compétente pour cette donnée.

2. Procédé selon la revendication 1, **caractérisé en ce que** pour chaque station de réception,
- des données caractéristiques définissent une portion de ladite zone cible non nécessairement continue, dite cercle de visibilité de cette station (50, 51, 52, 53, 54) de réception, pour laquelle cette station de réception est compétente,
- des données reçues par ledit module (10) de réception de cette station de réception sont sélectionnées par un module de sélection si ces données appartiennent audit cercle de visibilité de cette station, et diffusées sur ledit réseau (20) numérique terrestre si elles sont non sélectionnées par ledit module (11) de sélection.

3. Procédé selon la revendication 2, **caractérisé en ce que** lesdites données caractéristiques définissant ledit cercle de visibilité de chaque station (50, 51, 52, 53, 54) de réception sont mémorisées dans une mémoire accessible par ledit module (11) de sélection de cette station (50, 51, 52, 53, 54) de réception.

4. Procédé selon la revendication 3, **caractérisé en ce que**, pour chaque station (50, 51, 52, 53, 54) de réception, ladite mémoire de cette station (50, 51, 52, 53, 54) de réception qui comprend lesdites données caractéristiques qui définissent ledit cercle de visibilité de cette station (50, 51, 52, 53, 54, 55, 56) de réception, est accessible à distance par des moyens d'accès à distance.

5. Procédé selon l'une des revendications 1 à 4, **caractérisé en ce que** ledit réseau (20) numérique terrestre est un réseau numérique public.

6. Procédé selon l'une des revendications 1 à 5, **caractérisé en ce que** ladite zone cible est le globe terrestre.

7. Procédé selon l'une des revendications 1 à 6, **caractérisé en ce que** lesdites données issues de ladite couche spatiale sont des images (21) numériques.

8. Procédé selon les revendications 2 et 7 prises ensemble, **caractérisé en ce que**, pour chaque image reçue par chaque station de réception, des données représentatives des coordonnées spatiales et temporelles de cette image mémorisées dans l'en-tête de l'image reçue par ledit module (11) de sélection de cette station (50, 51, 52, 53, 54) de réception sont lues par des moyens de lecture.

9. Instrument d'acquisition et de rapatriement de données satellitaires représentatives d'une zone de l'espace, dite zone cible, comprenant :
- une pluralité de satellites (1, 100), dite couche spatiale d'acquisition de données, chaque satellite (1, 100) étant équipé d'au moins un dispositif (2) d'acquisition de données d'au moins une portion de ladite zone cible, et de moyens (4) de transmission vers le sol des données acquises,
- une pluralité de stations (50, 51, 52, 53, 54) de réception terrestres, dite couche terrestre, chaque station (50, 51, 52, 53, 54) de réception comprenant un module (12) de réception de données issues de ladite couche spatiale et des moyens (13) de mémorisation de données issues de ladite couche spatiale,
**caractérisé en ce qu'**il comprend :
- pour chaque donnée reçue par une station (50, 51, 52, 53, 54) de réception, dite station réceptrice, en provenance de ladite couche spatiale des moyens (22) de détermination d'une station (50, 51, 52, 53, 54) de réception destinée à mémoriser et à conserver cette donnée, dite station de réception compétente pour cette donnée,
- un réseau (20) numérique terrestre reliant les stations (50, 51, 52, 53, 54) de réception entre elles de sorte qu'une donnée reçue par une station réceptrice non compétente pour cette donnée puisse être acheminée par le biais de ce réseau (20) numérique terrestre vers la station de réception compétente pour cette donnée si ladite station réceptrice pour cette donnée n'est pas ladite station de réception compétente pour cette donnée.

10. Instrument selon la revendication 9, **caractérisé en ce que** lesdits moyens (22) de détermination d'une station de réception compétente comprennent, pour chaque station (50, 51, 52, 53, 54) de réception :
- des données caractéristiques définissant une portion de ladite zone cible non nécessairement continue, dite cercle de visibilité de cette station (50, 51, 52, 53, 54) de réception, pour laquelle cette station de réception est compétente,
- un module (11) de sélection de données reçues par ledit module (10) de réception de cette station adapté pour sélectionner les données qui appartiennent audit cercle de visibilité de cette station et diffuser sur ledit réseau (20) numérique terrestre toutes les données reçues par son module (10) de réception non sélectionnées par ledit module (11) de sélection.

11. Instrument selon la revendication 10, **caractérisé en ce que** chaque station (50, 51, 52, 53, 54) de réception comprend dans une mémoire accessible par ledit module (11) de sélection, lesdites données caractéristiques qui définissent ledit cercle de visibilité de cette station (50, 51, 52, 53, 54) de réception.

12. Instrument selon la revendication 11, **caractérisé en ce qu'**il comprend, pour chaque station (50, 51, 52, 53, 54) de réception, des moyens d'accès à distance à ladite mémoire de cette station (50, 51, 52, 53, 54) de réception qui comprend lesdites données caractéristiques qui définissent ledit cercle de visibilité de cette station (50, 51, 52, 53, 54, 55, 56) de réception.

13. Instrument selon l'une des revendications 9 à 12, **caractérisé en ce que** ledit réseau (20) numérique terrestre est un réseau numérique public.

14. Instrument selon l'une des revendications 9 à 13, **caractérisé en ce que** ladite zone cible est le globe terrestre.

15. Instrument selon la revendication 10, ou selon la revendication 10 et l'une des revendications 11 à 14 , **caractérisé en ce que** lesdites données issues de ladite couche spatiale sont des images (21) numériques, et **en ce que** ledit module (11) de sélection de données de chaque station (50, 51, 52, 53, 54) de réception comprend des moyens de lecture de l'en-tête de chaque image (21) adaptés pour lire des données représentatives des coordonnées spatiales et temporelles de cette image (21).

## Claims

1. Process for acquisition and downloading of satellite data from a zone of space, called the target zone, in which process:
- data (21) are acquired by a constellation of satellites (1), called the spatial layer, each satellite (1) being equipped with at least one device (2) for acquisition of data,
- the data (21) are transmitted to a plurality of receiving stations (50, 51, 52, 53, 54, 55, 56) distributed over the surface of the globe, called the terrestrial layer, each receiving station (50, 51, 52, 53, 54, 55, 56) including at least one module (10) for receiving data and means for storage of received data,
**characterised in that** for each datum received by a receiving station, called the receiver station, and emanating from said spatial layer:
- a receiving station intended to store and to keep this datum, called the competent receiving station, is determined by determination means,
- this datum is stored by said storage means of said receiver station of this datum if this receiver station is the competent receiving station for this datum,
- this datum is routed, by means of a terrestrial digital network linking the receiving stations with one another, from said receiver station to said competent receiving station for this datum if said receiver station of this datum is not said competent receiving station for this datum.

2. Process according to Claim 1, **characterised in that**, for each receiving station,
- characteristic data define a not necessarily continuous portion of said target zone, called the circle of visibility of this receiving station (50, 51, 52, 53, 54), for which this receiving station is competent,
- data received by said receiving module (10) of this receiving station are selected by a selection module if these data pertain to said circle of visibility of this station, and are broadcast over said terrestrial digital network (20) if they are not selected by said selection module (11).

3. Process according to Claim 2, **characterised in that** said characteristic data defining said circle of visibility of each receiving station (50, 51, 52, 53, 54) are stored in a memory that can be accessed by said selection module (11) of this receiving station (50, 51, 52, 53, 54).

4. Process according to Claim 3, **characterised in that** for each receiving station (50, 51, 52, 53, 54) said memory of this receiving station (50, 51, 52, 53, 54), which includes said characteristic data that define said circle of visibility of this receiving station (50, 51, 52, 53, 54, 55, 56), can be accessed remotely by means for remote access.

5. Process according to one of Claims 1 to 4, **characterised in that** said terrestrial digital network (20) is a public digital network.

6. Process according to one of Claims 1 to 5, **characterised in that** said target zone is the terrestrial globe.

7. Process according to one of Claims 1 to 6, **characterised in that** said data stemming from said spatial layer are digital images (21).

8. Process according to Claims 2 and 7 taken together, **characterised in that**, for each image received by each receiving station, data that are representative of the spatial and temporal coordinates of this image which are stored in the header of the image received by said selection module (11) of this receiving station (50, 51, 52, 53, 54) are read by reading means.

9. Instrument for acquisition and downloading of satellite data that are representative of a zone of space, called the target zone, including:
- a plurality of satellites (1, 100), called the spatial layer for acquisition of data, each satellite (1, 100) being equipped with at least one device (2) for acquisition of data pertaining to at least one portion of said target zone, and with means (4) for transmission of the acquired data to the ground,
- a plurality of terrestrial receiving stations (50, 51, 52, 53, 54), called the terrestrial layer, each receiving station (50, 51, 52, 53, 54) including a module (12) for receiving data stemming from said spatial layer and means (13) for storage of data stemming from said spatial layer,
**characterised in that** said instrument includes:
- for each datum received by a receiving station (50, 51, 52, 53, 54), called the receiver station, and emanating from said spatial layer, means (22) for determination of a receiving station (50, 51, 52, 53, 54) intended to store and to keep this datum, called the competent receiving station for this datum,
- a terrestrial digital network (20) linking the receiving stations (50, 51, 52, 53, 54) with one another so that a datum received by a receiver station that is not competent for this datum can be routed by means of this terrestrial digital network (20) to the competent receiving station for this datum if said receiver station for this datum is not said competent receiving station for this datum.

10. Instrument according to Claim 9, **characterised in that** said means (22) for determination of a competent receiving station include, for each receiving station (50, 51, 52, 53, 54):
- characteristic data defining a not necessarily continuous portion of said target zone, called the circle of visibility of this receiving station (50, 51, 52, 53, 54), for which this receiving station is competent,
- a module (11) for selection of data received by said receiving module (10) of this station, which is suitable to select the data that pertain to said circle of visibility of this station and to broadcast over said terrestrial digital network (20) all the data received by its receiving module (10) not selected by said selection module (11).

11. Instrument according to Claim 10, **characterised in that** each receiving station (50, 51, 52, 53, 54) includes, in a memory that can be accessed by said selection module (11), said characteristic data that define said circle of visibility of this receiving station (50, 51, 52, 53, 54).

12. Instrument according to Claim 11, **characterised in that** it includes, for each receiving station (50, 51, 52, 53, 54), means for remote access to said memory of this receiving station (50, 51, 52, 53, 54), which includes said characteristic data that define said circle of visibility of this receiving station (50, 51, 52, 53, 54, 55, 56).

13. Instrument according to one of Claims 9 to 12, **characterised in that** said terrestrial digital network (20) is a public digital network.

14. Instrument according to one of Claims 9 to 13, **characterised in that** said target zone is the terrestrial globe.

15. Instrument according to Claim 10 or according to Claim 10 and one of Claims 11 to 14, **characterised in that** said data stemming from said spatial layer are digital images (21), and **in that** said module (11) for selection of data pertaining to each receiving station (50, 51, 52, 53, 54) includes means for reading the header of each image (21) that are suitable to read data that are representative of the spatial and temporal coordinates of this image (21).

## Patentansprüche

1. Verfahren zur Erfassung und Einholung von Satellitendaten eines Bereichs des Raums, bezeichnet als Zielbereich, in dem:
- Daten (21) durch eine Satellitenkonstellation (1), bezeichnet als räumliche Schicht, erfasst werden, wobei jeder Satellit (1) mit wenigstens einer Vorrichtung (2) zur Datenerfassung ausgerüstet ist,
- die Daten (21) auf eine Vielzahl von Stationen (50, 51, 52, 53, 54, 55, 56) für den Empfang übertragen werden, die auf der Fläche des Globus, bezeichnet als terrestrische Schicht, verteilt sind, wobei jede Station (50, 51, 52, 53, 54, 55, 56) für den Empfang wenigstens ein Modul (10) für den Empfang von Daten und Speichermittel empfangener Daten umfasst,
**dadurch gekennzeichnet, dass** für jegliche von einer Station für den Empfang, bezeichnet als Empfängerstation, aus der genannten räumlichen Schicht stammenden empfangenen Daten:
- eine zur Speicherung und Aufbewahrung dieser Daten bestimmte Station für den Empfang, bezeichnet als zuständige Station für den Empfang, von Bestimmungsmitteln bestimmt wird,
- diese Daten von den genannten Speichermitteln der genannten Empfängerstation gespeichert werden, wenn diese Empfängerstation die für diese Angaben zuständige Station für den Empfang ist,
- diese Daten auf dem Weg eines terrestrischen digitalen Netzes, das die Stationen für den Empfang untereinander verbindet, von der genannten Empfängerstation zu der genannten zuständigen Station für den Empfang für diese Daten verbracht werden, wenn die genannte Empfängerstation dieser Daten nicht die genannte für diese Daten zuständige Station für den Empfang ist.

2. Verfahren gemäß Anspruch 1, **dadurch gekennzeichnet, dass** für jede Station für den Empfang,
- charakteristische Daten einen Abschnitt des genannten, nicht notwendigerweise kontinuierlichen Zielbereichs, bezeichnet als Sichtbarkeitskreis dieser Station (50, 51, 52, 53, 54) zum Empfang definieren, für den diese Station für den Empfang zuständig ist,
- von dem genannten Modul (10) zum Empfang dieser Station für den Empfang empfangene Daten durch ein Auswahlmodul ausgewählt werden, wenn diese Daten zu dem genannten Sichtbarkeitskreis dieser Station gehören und in dem genannten terrestrischen digitalen Netz (20) ausgestrahlt werden, wenn sie nicht von dem genannten Auswahlmodul (11) ausgewählt sind.

3. Verfahren gemäß Anspruch 2, **dadurch gekennzeichnet, dass** die genannten charakteristischen Daten, die den genannten Sichtbarkeitskreis jeder Station für den Empfang (50, 51, 52, 53, 54) definieren, in einem Speicher gespeichert werden, der durch das genannte Auswahlmodul (11) dieser Station (50, 51, 52, 53, 54) für den Empfang zugänglich ist.

4. Verfahren gemäß Anspruch 3, **dadurch gekennzeichnet, dass** der genannte Speicher dieser Station (50, 51, 52, 53, 54) für den Empfang, der die genannten charakteristischen Daten umfasst, die den genannten Sichtbarkeitskreis dieser Station (50, 51, 52, 53, 54) für den Empfang definieren, für jede Station (50, 51, 52, 53, 54) für den Empfang entfernt durch Fernzugriffsmittel zugänglich ist.

5. Verfahren gemäß Anspruch 1 bis 4, **dadurch gekennzeichnet, dass** das genannte terrestrische digitale Netz (20) ein öffentliches digitales Netz ist.

6. Verfahren gemäß Anspruch 1 bis 5, **dadurch gekennzeichnet, dass** der genannte Zielbereich der terrestrische Globus ist.

7. Verfahren gemäß Anspruch 1 bis 6, **dadurch gekennzeichnet, dass** die genannten Daten, die aus der genannten räumlichen Schicht stammen, digitale Bilder (21) sind.

8. Verfahren gemäß Anspruch 2 und 7 zusammen genommen, **dadurch gekennzeichnet, dass** Daten, die räumliche und zeitliche Koordinaten dieses Bildes darstellen, für jedes von jeder Station für den Empfang empfangenen Bildes in der Kopfzeile des Bildes gespeichert werden, das von dem genannten Auswahlmodul (11) dieser Station (50, 51, 52, 53, 54) für den Empfang empfangen wird, von Lesemitteln gelesen werden.

9. Instrument zur Erfassung und Einholung von Satellitendaten, die einen Bereich des Raums, bezeichnet als Zielbereich, darstellen, umfassend:
- eine Vielzahl von Satelliten (1, 100), bezeichnet als räumliche Schicht zur Erfassung von Daten, wobei jeder Satellit (1, 100) mit wenigstens einer Vorrichtung (2) zur Erfassung von Daten wenigstens eines Abschnitts des genannten Zielbereichs und mit Mitteln (4) zur Übertragung der erfassten Daten an den Boden ausgerüstet ist,
- eine Vielzahl von terrestrischen Stationen (50, 51, 52, 53, 54) für den Empfang, bezeichnet als terrestrische Schicht, wobei jede Station (50, 51, 52, 53, 54) für den Empfang ein Modul (12) für den Empfang von Daten, die aus der genannten räumlichen Schicht stammen, und Speichermittel (13) von Daten, die aus der genannten räumlichen Schicht stammen, umfasst,
**dadurch gekennzeichnet, dass** es umfasst:
- Bestimmungsmittel (22) einer Station (50, 51, 52, 53, 54) für den Empfang, die zum Speichern und zum Aufbewahren dieser Daten bestimmt ist, bezeichnet als für diese Daten zuständige Empfängerstation, für jegliche von einer Station (50, 51, 52, 53, 54) für den Empfang, bezeichnet als Empfängerstation, aus der genannten räumlichen Schicht erhaltene Daten,
- ein terrestrisches digitales Netz (20), das die Stationen (50, 51, 52, 52, 54) für den Empfang untereinander derart verbindet, dass jegliche Daten, die von einer für diese Daten nicht zuständigen Empfängerstation empfangen werden, auf dem Weg dieses terrestrischen digitalen Netzes (20) zu der für diese Daten zuständigen Empfängerstation verbracht werden können, wenn die genannte Empfängerstation für diese Daten nicht die genannte, für diese Daten zuständige Station für den Empfang ist.

10. Instrument gemäß Anspruch 9, **dadurch gekennzeichnet, dass** die genannten Bestimmungsmittel (22) einer zuständigen Station für den Empfang für jede Station (50, 51, 52, 53, 54) für den Empfang umfassen:
- charakteristische Daten, die einen Abschnitt des genannten, nicht notwendigerweise kontinuierlichen Zielbereichs, bezeichnet als Sichtbarkeitskreis dieser Station (50, 51, 52, 53, 54) für den Empfang, für den diese Station für den Empfang zuständig ist, definieren,
- ein Auswahlmodul (11) von Daten, die von dem genannten Modul (10) zum Empfang dieser Station empfangen werden, das geeignet ist, um die Daten auszuwählen, die zu dem genannten Sichtbarkeitskreis dieser Station gehören und in dem genannten terrestrischen digitalen Netz (20) alle Daten auszustrahlen, die von seinem Modul (10) für den Empfang empfangen wurden und von dem genannten Auswahlmodul (11) nicht ausgewählt wurden.

11. Instrument gemäß Anspruch 10, **dadurch gekennzeichnet, dass** jede Station (50, 51, 52, 53, 54) für den Empfang in einem durch das genannte Auswahlmodul (11) zugänglichen Speicher die genannten charakteristischen Daten umfasst, die den genannten Sichtbarkeitskreis dieser Station (50, 51, 52, 53, 54) für den Empfang definieren.

12. Instrument gemäß Anspruch 11, **dadurch gekennzeichnet, dass** es für jede Station (50, 51, 52, 53, 54) für den Empfang Fernzugriffsmittel zu dem genannten Speicher dieser Station (50, 51, 52, 53, 54) für den Empfang umfasst, die die genannten charakteristischen Daten umfasst, die den genannten Sichtbarkeitskreis dieser Station (50, 51, 52, 53, 54) für den Empfang definieren.

13. Instrument gemäß Anspruch 9 bis 12, **dadurch gekennzeichnet, dass** das genannte terrestrische digitale Netz (20) ein öffentliches digitales Netz ist.

14. Instrument gemäß Anspruch 9 bis 13, **dadurch gekennzeichnet, dass** der genannte Zielbereich der terrestrische Globus ist.

15. Instrument gemäß Anspruch 10 oder gemäß Anspruch 10 und einem der Ansprüche 11 bis 14, **dadurch gekennzeichnet, dass** die genannten Daten, die aus der genannten räumlichen Schicht stammen, digitale Bilder (21) sind und dass das genannte Auswahlmodul (11) der Daten jeder Station (50, 51, 52, 53, 54) für den Empfang Lesemittel der Kopfzeile jedes Bildes (21) umfasst, die geeignet sind, um Daten zu lesen, die räumliche und zeitliche Koordinaten dieses Bildes (21) darstellen.
